# EUROPÄISCHE PATENTANMELDUNG

(11) **EP 2 348 060 A1**
(43) Veröffentlichungstag der Anmeldung: **27.07.2011**
(21) Anmeldenummer: 10000562.8
(22) Anmeldetag: 21.01.2010
(51) Int. Cl.: C08G 18/08, C08G 18/42, C09D 175/06

(54) **Urethanisierte Polyester**

(71) Anmelder: Bayer MaterialScience AG, 51368 Leverkusen (DE)
(72) Erfinder: Gewiß, Heinz-Dietmar, 40668 Meerbusch (DE); Schrinner, Marc Claudius, 51103 Köln (DE); Reyer, Robert, 40764 Langenfeld (DE); Hackbarth, Sandra, 50181 Bedburg (DE); Irle, Christoph Dr., Shanghai 200135 (CN); Melchiors, Martin Dr., 42799 Leichlingen (DE)

(57) **Zusammenfassung**

Die Erfindung betrifft neue urethanisierte Polyester, Verfahren zu deren Herstellung sowie deren Verwendung in Bindemittelkombinationen und Beschichtungsmittel.

## Beschreibung

Die Erfindung betrifft neue urethanisierte Polyester, Verfahren zu deren Herstellung sowie deren Verwendung in Bindemittelkombinationen und Beschichtungsmittel.

Vor dem Hintergrund einer zunehmend strengeren Umweltgesetzgebung gewannen in den letzten Jahren wasserdispergierbare urethanisierte Polyester für verschiedene Anwendungsgebiete an Bedeutung. Sie finden heute insbesondere als Komponente für qualitativ hochwertige wasserverdünnbare Zweikomponenten-Polyurethan-Lacke (2K-PUR-Lacke) Verwendung.

Trotz ihrer breiten Marktakzeptanz für die unterschiedlichsten Anwendungen weisen die zurzeit verfügbaren urethanisierten Polyester Nachteile auf. Unabhängig von der Art der Modifizierung kommen in wässrigen 2K-PUR-Lacken heute überwiegend wasserdispergierbare urethanisierte Polyester auf Basis von Phthalsäure(anhydrid) bzw. Isophthalsäure(anhydrid) zum Einsatz.

Diese führen in der Regel bereits bei niedrigen Temperaturen zu Beschichtungen mit guten Beständigkeiten gegenüber chemischer und mechanischer Belastung, zeigen dabei aber eine in vielen Fällen nicht ausreichenden Glanz.

Es war daher eine Aufgabe der vorliegenden Erfindung, urethanisierte Polyester zur Verfügung zu stellen, durch deren Verwendung in Beschichtungsmitteln Lacke erhalten werden können, die hohen Glanz aufweisen.

Ebenfalls eine Aufgabe der vorliegenden Erfindung war es, urethanisierte Polyester zur Verfügung zu stellen, durch deren Verwendung in Beschichtungsmitteln Lacke erhalten werden können, die nach DIN 67530 bei 60º einen Glanzwert grösser 90, insbesondere grösser 92, aufweisen.

Es war daher eine Aufgabe der vorliegenden Erfindung, urethanisierte Polyester zur Verfügung zu stellen, durch deren Verwendung in Beschichtungsmitteln Lacke erhalten werden können, die guten Beständigkeiten gegenüber chemischer und mechanischer Belastung und hohen Glanz aufweisen.

Die vorstehende Aufgabe wurde durch die Gegenstände der Erfindung gelöst.

Ein Gegenstand der vorliegenden Erfindung sind urethanisierter Polyester, die dadurch erhältlich sind, dass in einer ersten Reaktionsstufe ein Umsetzungsprodukt (A) aus
a) 5 bis 25 Gew.-% einer unsubstituierten oder substituierten Benzoesäure, die mit 1, 2 oder 3 Substituenten ausgewählt aus der Gruppe bestehend aus F, Cl, Br, -OH, -CH₃, -CH₂-CH₃, -O-CH₃ und -O-CH₂-CH₃ substituiert sein kann,
b) 15 bis 50 Gew.-% wenigstens einer Di- und/oder Tricarbonsäure bzw. deren Anhydriden,
c) 20 bis 60 Gew.-% wenigstens eines di- und/oder trifunktionellen Alkohols und
d) 3 bis 20 Gew.-% Dimethylolpropionsäure, wobei sich die Gewichtsangaben der Komponenten a) bis d) zu 100 Gew.-% ergänzen erhalten wird, und in einer weiteren Reaktionsstufe das Umsetzungsprodukt (A) mit wenigstens einem organischen Polyisocyanat (B) umgesetzt wird.

Bevorzugt ist das Umsetzungsprodukt (A) aus 10 bis 20 Gew.-% einer unsubstituierten oder substituierten Benzoesäure, die mit 1, 2 oder 3 Substituenten ausgewählt aus der Gruppe bestehend aus F, Cl, Br, -OH, -CH₃, -CH₂-CH₃, -O-CH₃ und -O-CH₂-CH₃ substituiert sein kann, erhältlich.

Bevorzugt ist das Umsetzungsprodukt (A) aus 25 bis 40 Gew.-% wenigstens einer Di- und/oder Tricarbonsäure bzw. deren Anhydriden erhältlich. Bevorzugt ist das Umsetzungsprodukt (A) aus 30 bis 50 Gew.-% wenigstens eines di- und/oder trifunktionellen Alkohols erhältlich. Bevorzugt ist das Umsetzungsprodukt (A) aus 3 bis 15 Gew.% Dimethylolpropionsäure erhältlich.

Bevorzugt weist der urethanisierte Polyester eine Säurezahl von 15 bis 35 mg KOH/g auf. Die Säurezahl wird dabei nach DIN 3682 bestimmt.

Bevorzugt sind Di- und/oder Tricarbonsäuren bzw. deren Anhydride mit einem Molekulargewicht im Bereich von 98 g/mol bis 600 g/mol.

Bevorzugt sind Di- und/oder Tricarbonsäuren bzw. deren Anyhdride ausgewählt aus der Gruppe bestehend aus Phthalsäure(anhydrid), Isophthalsäure, Terephthalsäure Tetrahydrophthalsäure(anhydrid), Hexahydrophthalsäure(anhydrid), Maleinsäure(anhydrid), Bernsteinsäure(anhydrid), Fumarsäure, Adipinsäure, Sebacinsäure, Azelainsäure und Benzoltricarbonsäure.

Besonders bevorzugt sind Di- und/oder Tricarbonsäuren bzw. deren Anhydride ausgewählt aus der Gruppe bestehend aus Phthalsäure, Phthalsäureanhydrid, Hexahydrophthalsäureanhydrid, Isophthalsäure, Isophthalsäure, Maleinsäureanhydrid, Terephthalsäure, Fumarsäure, Adipinsäure und Benzoltricarbonsäure.

Ganz besonders bevorzugt sind Di- und/oder Tricarbonsäuren bzw. deren Anyhdride ausgewählt aus der Gruppe bestehend aus Phthalsäure, Phthalsäureanhydrid, Isophthalsäure und Isophthalsäureanhydrid.

Bevorzugt sind di- und trifunktionelle Alkohole mit einem Molekulargewichtsbereichs 62 bis 400.

Bevorzugt sind di- und trifunktionelle Alkohole ausgewählt aus der Gruppe bestehend aus Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, 1,4-Butandiol, Trimethylpropan, Glycerin und Trimethylpentandiol.

Besonders bevorzugt sind di- und trifunktionelle Alkohole ausgewählt aus der Gruppe bestehend aus Ethylenglykol, 1,2-Propylenglykol, 1,6-Hexandiol, 1,4-Cyclohexandimethanol, Neopentylglykol, Trimethylolpropan und Glycerin.

Ganz besonders bevorzugt sind di- und trifunktionelle Alkohole ausgewählt aus der Gruppe bestehend aus Neopentylglykol und Trimethylolpropan.

Bevorzugt weist der urethanisierte Polyester ein gewichtsmittleres Molekulargewicht Mw im Bereich zwischen 3500 g/mol bis 30000 g/mol, besonders bevorzugt im Bereich zwischen 4500 g/mol und 10000 g/mol, ganz besonders bevorzugt im Bereich zwischen 5000 g/mol und 7000 g/mol auf. Das gewichtsmittlere Molekulargewicht wird dabei nach DIN 55672/1 bzw. DIN 55672/2 bestimmt.

Bevorzugt weist der urethanisierte Polyester ein zahlenmittleres Molekulargewicht Mn im Bereich zwischen 500 bis 20000 g/mol, besonders bevorzugt im Bereich zwischen 800 und 10000 g/mol, ganz besonders bevorzugt im Bereich zwischen 1000 g/mol und 2000 g/mol auf. Das zahlenmittlere Molekulargewicht wird dabei nach DIN 55672/1 bzw. DIN 55672/2 bestimmt.

Bevorzugt weist der urethanisierte Polyester eine Hydroxylzahl im Bereich zwischen 45 und 190 mg/KOH, besonders bevorzugt im Bereich zwischen 70 mg/KOH und 165 mg/KOH, ganz besonders bevorzugt im Bereich zwischen 110 mg/KOH und 150 mg/KOH auf. Die Hydroxylzahl wird dabei nach DIN 53240 T.2 bestimmt.

Bevorzugt als Komponente B) sind beispielsweise beliebige durch Phosgenierung oder nach phosgenfreien Verfahren, wie z.B. durch thermische Urethanspaltung, zugängliche monomere Diisocyanate und Triisocyanate. Besonders bevorzugte Diisocyanate sind solche des Molekulargewichtsbereichs 140 bis 400 g/mol mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4-und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanatoprop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Ebenfalls als Komponente B) sind aber auch beliebige durch Modifizierung der genannten aliphatischen, cycloaliphatischen, araliphatischen und/oder aromatischen Diisocyanate erhältliche, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur geeignet, wie sie beispielsweise in J. Prakt. Chem. 336 (1994) 185 - 200 und EP-A 0 798 299 beispielhaft beschrieben sind.

Ganz besonders bevorzugt ist die Komponente (B) Isophorondiisocyanat.

Bevorzugt sind urethanisierte Polyester, die dadurch erhältlich sind, dass in einer ersten Reaktionsstufe ein Umsetzungsprodukt (A) aus
a) 10 bis 20 Gew.-% einer unsubstituierten oder substituierten Benzoesäure, die mit 1, 2 oder 3 Substituenten ausgewählt aus der Gruppe bestehend aus F, Cl, Br, -OH, -CH₃, -CH₂-CH₃, -O-CH₃ und -O-CH₂-CH₃ substituiert sein kann
b) 25 bis 40 Gew.-% wenigstens einer Di- und/oder Tricarbonsäure bzw. deren Anhydriden,
c) 30 bis 50 Gew.-% wenigstens eines di- und/oder trifunktionellen Alkohols und
d) 3 bis 10 Gew.-% Dimethylolpropionsäure,
wobei sich die Gewichtsangaben der Komponenten a) bis d) zu 100 Gew.-% ergänzen, erhalten wird, und in einer weiteren Reaktionsstufe das Umsetzungsprodukt (A) mit wenigstens einem organischen Polyisocyanat (B) umgesetzt wird.

Besonders bevorzugt sind urethanisierte Polyester, die dadurch erhältlich sind, dass in einer ersten Reaktionsstufe ein Umsetzungsprodukt (A) aus
a) 10 bis 20 Gew.-% einer unsubstituierten Benzoesäure
b) 25 bis 40 Gew.-% wenigstens einer Di- und/oder Tricarbonsäure ausgewählt aus der Gruppe bestehend aus Phthalsäure und Isophthalsäure bzw. deren Anhydriden,
c) 30 bis 50 Gew.-% wenigstens eines di- und/oder trifunktionellen Alkohols ausgewählt aus der Gruppe bestehend aus Neopentylglykol und Trimethylolpropan und
d) 3 bis 10 Gew.-% Dimethylolpropionsäure,
wobei sich die Gewichtsangaben der Komponenten a) bis d) zu 100 Gew.-% ergänzen,erhalten wird, und in einer weiteren Reaktionsstufe das Umsetzungsprodukt (A) mit wenigstens einem organischen Polyisocyanat (B) umgesetzt wird.

Ein weiterer Gegenstand der vorliegenden Erfindung ist ein Verfahren zur Herstellung von urethanisierten Polyestern, wobei in einem ersten Reaktionsschritt die Komponenten a), b) und c) bevorzugt in Anwesenheit eines organischen Lösungsmittel oder in Substanz, besonders bevorzugt in Substanz, bei einer Temperatur bevorzugt im Bereich zwischen 100 °C und 250 °C, besonders bevorzugt im Bereich zwischen 120 °C und 220 °C, für eine Dauer bevorzugt von 2 bis 40 Stunden, besonders bevorzugt von 5 bis 30 Stunden, zur Reaktion gebracht werden. In einem zweiten Reaktionsschritt wird der so erhaltene Polyester mit der Komponente d), bevorzugt in einem organischen Lösungsmittel ausgewählt aus der Gruppe bestehend aus N-Methylpyrrolidon, Diethylenglykoldimethylether, Methylethylketon, Methylisobutylketon, Aceton, Xylol, Toluol, Butylacetat und Mischungen, besonders bevorzugt in Aceton, in Gegenwart eines Katalysator umgesetzt. Die Umsetzung erfolgt bevorzugt bei einer Temperatur im Bereich zwischen 50 °C und 80 °C für die Dauer 2 Stunden bis 20 Stunden.

In einem weiteren Reaktionsschritt wird das Umsetzungsprodukt (A) mit wenigstens einem Polyisocyanat (B) umgesetzt.

Die Urethanisierung findet bereits bei Raumtemperatur (23 °C) statt, kann aber falls gewünscht auch bei niedrigeren oder höheren Temperaturen durchgeführt werden. Zur Beschleunigung der Reaktion, kann die Umsetzung auch bei Temperaturen bis zu 160 °C durchgeführt werden.

Zur Beschleunigung der Urethanisierungsreaktion können bei der Herstellung der urethanisierten Polyester gegebenenfalls aber auch die üblichen aus der Polyurethanchemie bekannten Katalysatoren mitverwendet werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethyl-aminocyclohexan, N,N'-Dimethylpiperazin oder Metallsalze wie Eisen(III)-chlorid, Aluminium-tri(ethylacetoacetat), Zinkchlorid, Zink(II)-n-octanoat, Zink(II)-2-ethyl-l-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Wismut-2-ethyl-1-hexanoat, Wismut-octoat, Molybdänglykolat oder beliebige Gemische solcher Katalysatoren.

Bevorzugt wird der urethanisierte Polyester durch Umsetzung der Komponenten (A) und (B) in einem Verhältnis im Bereich zwischen 2:1 und 4:1, ganz besonders bevorzugt im Bereich zwischen 2,5:1 und 3,5:1 erhalten.

Vor oder während des Dispergierschrittes werden durch Zugabe von mindestens einer Base 25 % bis 110 %, vorzugsweise 40 % bis 110 % der eingebauten Carboxylgruppe in Carboxylatgruppen überführt.

Bevorzugt werden die Basen ausgewählt aus der Gruppe bestehend aus Ammoniak, N-Methylmorpholin, Triethylamin, Dimethylethanolamin, Methyldiethanolamin, Triethanolamin, Morpholin, Tripropylamin, Ethanolamin, Triisopropanolamin, 2-Amino-2-methyl-1-propanol und deren Mischungen. Besonders bevorzugt Basen sind Ammoniak und Dimethylethanolamin.

Nach der Herstellung des urethanisierten Polyesters können der Dispersion zur Erzielung bestimmter Eigenschaften auch geringe Mengen anderer organischer Lösemittel wie beispielsweise Ethanol, Propanol, Butanol, Butylglykol, Hexanol, Dowanol PnB, Octanol, Butyldiglykol, Ethyldiglykol, Methyldiglykol und Methoxypropanol zugesetzt werden.

Im Dispergierschritt kann alternativ das Gemisch aus Wasser und Base zum urethanisierten Polyester, das Wasser zum Gemisch aus urethanisiertem Polyester und Base, der urethanisierte Polyester zum Gemisch aus Wasser und Base oder das Gemisch aus urethanisiertem Polyester und Base zum Wasser gegeben werden. Die Dispergierbarkeit der urethanisierten Polyester in Wasser kann gewünschtenfalls durch Mitverwendung von externen Emulgatoren wie beispielsweise ethoxyliertes Nonylphenol beim Dispergieren verbessert werden.

Der Dispergierschritt wird üblicherweise bei 40 °C bis 120 °C durchgeführt.

Ein weiterer Gegenstand der vorliegenden Erfindung ist eine wässrige Bindemittelkombination enthaltend wenigstens einen erfindungsgemäßen urethanisierten Polyester wie vorstehend beschrieben

Bevorzugt weist die wässrige Bindemittelkombination einen Feststoffgehalt von 30 Gew.-% bis 50 Gew.-%, besonders bevorzugt von 37 Gew.-% bis 42 Gew.-% auf.

Bevorzugt beträgt der Anteil an organischen Lösungsmitteln in der wässrigen Bindemittelkombination < 6 Gew.-%, besonders bevorzugt < 4 Gew.-%, ganz besonders bevorzugt < 2 Gew.-%.

Bevorzugt weist die wässrige Bindemittelkombination eine Viskosität von 10 mPa^{.}s bis 30 000 mPa^{.}s, besonders bevorzugt von 50 mPa^{.}s bis 10 000 mPa^{.}s, ganz besonders bevorzugt von 500 mPa^{.}s bis 8000 mPa^{.}s bei 23 °C auf. Die Bestimmung der Viskosität erfolgt dabei mit Hilfe eines Brookfield Rotationsviskosimeters.

Bevorzugt weist die wässrige Bindemittelkombination einen pH-Werte von 5 bis 10, besonders bevorzugt von 6 bis 9 auf.

In Abhängigkeit vom Molekulargewicht des urethanisierten Polyesters, dem Gehalt an Carboxyl- bzw. Carboxylatgruppen, sowie von der Art des eingesetzten Neutralisationsmittels und der gegebenenfalls verwendeten Hilfslösemittel liegen die urethanisierten Polyester als Lösung oder als Dispersion vor, im Allgemeinen sind jedoch sowohl gelöste als auch dispergierte Anteile in der Bindemittelkombination vorhanden.

Ein weiterer Gegenstand der vorliegenden Erfindung ist ein Beschichtungsmittel enthaltend wenigstens eine erfindungsgemäße wässrige Bindemittelkombination und weitere Hilfs- und Zusatzmittel.

Bevorzugte Hilfs- und Zusatzmittel sind Entschäumungsmittel, Verdickungsmittel, Verlaufhilfsmittel, Pigmente und Dispergierhilfsmittel für die Pigmentverteilung.

Die so erhaltenen erfindungsgemässen Beschichtungsmittel eignen sich für alle Einsatzgebiete, in denen lösemittelhaltige, lösemittelfreie oder andersartige wässrige Anstrich- und Beschichtungssysteme mit einem erhöhten Eigenschaftsprofil Verwendung finden, z. B.; Beschichtung praktisch aller mineralischer Baustoff-Oberflächen wie Kalk- und/oder Zement gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier; Lackierung und Beschichtung metallischer Oberflächen; Beschichtung und Lackierung asphalt- oder bitumenhaltiger Straßenbeläge; Lackierung und Versiegelung diverser Kunststoffoberflächen; ausserdem sind sie zur flächigen Verklebung diverser Werkstoffe geeignet, wobei gleichartige und unterschiedliche Werkstoffe miteinander verbunden werden. Die erfindungsgemässen Beschichtungsmittel können dabei sowohl als Grundierung-, Füller- und auch als Decklackbindemittel eingesetzt werden.

### Beispiele

### 1.1. Synthese des urethanisierten Polyesters (erfindungsgemäß)

Phthalsäureanhydrid (724 g), Isophthalsäure (1039 g), Trimethylolpropan (1714 g), Neopentylglykol (521 g) und Benzoesäure (745 g) werden in einer typischen Veresterungsapparatur bestehend aus Kolben mit Rückflußkühler, Rührer und Tropftrichter ausgestattet eingewogen und auf 140 °C unter Stickstoff Atmosphäre erhitzt. Nach drei Stunden wird weiter auf 170 °C aufgeheizt. Man kondensiert bei 220 °C bis zu einer Säurezahl < 3 und einer Hydroxylzahl von 240 - 270 mg KOH/g. Das Rohprodukt wird vor dem nächsten Schritt aufgereinigt und unter Rühren mit Dimethylolpropionsäure (80 g), und Desmorapid® SO (1,5 g) (Sn-(II)-octoat) und Aceton (808 g) versetzt.

### 1.2. Synthese der wässrigen Bindemittelkombination (erfmdungsgemäß)

1045 g des so erhaltenen Polyester Rohproduktes aus Schritt 1 werden auf 55° C erhitzt, mit Isophorondiisocyanat (305 g) umgesetzt und mit Dimethylethanolamin (57,8 g) neutralisiert. Abschließend wird in Wasser (1984 g) dispergiert und das Aceton im Vakuum abdestilliert.

### Feststoffgehalt: 43,9 %

Die Festkörperermittlung erfolgte im Trockenschrank. Der Feststoffgehalt wurde wie folgend berechnet: Auswaage [g]*100/Einwaage [g] = Gew.-% Festkörper
Viskosität (23 °C): 2280 mPa.s
   Die Viskositätsbestimmung erfolgte mit einem Brookfield Rotationsviskosimeter.
Säurezahl: 26,6
   Die Bestimmung der Säurezahl erfolgte nach DIN 3682.
pH-Wert: 7,7
   Die pH-Wert Messung erfolgte nach der internationalen Norm ISO 976.

### 2.1. Synthese des urethanisierten Polyesters (erfindungsgemäß)

Phthalsäureanhydrid (2056 g), Isophthalsäure (3033 g), Trimethylolpropan (4506 g), Neopentylglykol (1064 g), Benzoesäure (1428 g) und Sojaölfettsäure (1636 g) werden in einer typischen Veresterungsapparatur bestehend aus Kolben mit Rückflußkühler, Rührer und Tropftrichter ausgestattet eingewogen und auf 140 °C unter Stickstoff Atmosphäre erhitzt. Nach drei Stunden wird weiter auf 170 °C aufgeheizt. Man kondensiert bei 220 °C bis zu einer Säurezahl < 3 und einer Hydroxylzahl von 240 - 270 mg KOH/g. Das Rohprodukt wird vor dem nächsten Schritt aufgereinigt und unter Rühren mit Dimethylolpropionsäure (90 g), Ethylenglykol (7,5 g), NMP (264,7 g) und Desmorapid® SO (1,5 g) (Sn-(II)-octoat).

2.2. Synthese der wässrigen Bindemittelkombination (erfindungsgemäß) 1584,7 g des so erhaltenen Polyester Rohproduktes aus Schritt 1 werden auf 55° C erhitzt, mit Isophorondiisocyanat (262,5 g) umgesetzt und mit Dimethylethanolamin (45,7 g) neutralisiert. Abschließend wird in Wasser (1497 g) dispergiert und das Aceton im Vakuum abdestilliert.
Feststoffgehalt: 44,7 %
   Die Festkörperermittlung erfolgte im Trockenschrank. Der Feststoffgehalt wurde wie folgend berechnet: Auswaage [g]*100/Einwaage [g] = Gew.-% Festkörper
Viskosität (23 °C): 2490 mPa.s
   Die Viskositätsbestimmung erfolgte mit einem Brookfield Rotationsviskosimeter.
Säurezahl: 26,8
   Die Bestimmung der Säurezahl erfolgte nach DIN 3682.
pH-Wert: 7,4
   Die pH-Wert Messung erfolgte nach der internationalen Norm ISO 976.

### 3.1. Synthese des urethanisierten Polyesters (Vergleich)

Isophthalsäure (759 g), Trimethylolpropan (2383 g) und Neopentylglykol (1375 g) werden in einer typischen Veresterungsapparatur bestehend aus Kolben mit Rückflußkühler, Rührer und Tropftrichter ausgestattet eingewogen und auf 140 °C unter Stickstoff Atmosphäre erhitzt. Nach drei Stunden wird weiter auf 170 °C aufgeheizt. Man kondensiert bei 220 °C bis zu einer Säurezahl < 3 und einer Hydroxylzahl von 240 - 270 mg KOH/g. Das Rohprodukt wird vor dem nächsten Schritt aufgereinigt und unter Rühren mit Trimethylolpropan (12,0 g), Dimethylolpropionsäure (90 g), Desmorapid® SO (1,9 g) (Sn-(II)-octoat) und Aceton (808 g) versetzt.

### 3.2. Synthese der wässrigen Bindemittelkombination (Vergleich)

2036,6 g des so erhaltenen Polyester Rohproduktes aus Schritt 1 werden auf 55° C erhitzt, mit Isophorondiisocyanat (273,3 g) umgesetzt und mit Dimethylethanolamin (53,8 g) neutralisiert. Abschließend wird in Wasser (1833 g) dispergiert und das Aceton im Vakuum abdestilliert.
Feststoffgehalt: 46,5 %
   Die Festkörperermittlung erfolgte im Trockenschrank. Der Feststoffgehalt wurde wie folgend berechnet: Auswaage [g]*100/Binwaage [g] = Gew.-% Festkörper
Viskosität (23°C): 920 mPa.s
   Die Viskositätsbestimmung erfolgte mit einem Brookfield Rotationsviskosimeter.
Säurezahl: 29,2
   Die Bestimmung der Säurezahl erfolgte nach DIN 3682.
pH-Wert: 7,4
   Die pH-Wert Messung erfolgte nach der internationalen Norm ISO 976.

### 5. Herstellung des Beschichtungsmittels

### Beispiel 1 (erfindungsgemäß)

**Tabelle 1: Formulierung eines wässrigen 2K-PUR Klarlackes**

| **Komponente 1** | **Gew.-Teile** |
|---|---|
| Polyolkomponente (b1): | 43,70 |
| Surfynol^{®} 104 BC¹ | 0,71 |
| Borchigen^{®} SN 95² | 2,25 |
| Borchigol^{®} LA 200³ (10%-ig in BG) | 0,89 |
| Borchigel^{®} PW 25⁴ | 0,14 |
| Tronox^{®} R-KB-4⁵ | 28,22 |
| | |
| | |

| **Komponente 2** | |
|---|---|
| Polyisocyanatkomponente (a1) (80%-ig MPA) | 19,52 |
| | |
| Gesamt Komp. 1 + Komp. 2 | 95,43 |
| MV Komp. 1 + Komp. 2 | 75,91 : 19,52 |
| H₂O 31 sec. DIN 4 auf 100,0 g | 4,57 |

| | |
|---|---|
| ¹ Air Products N.L., Additiv zur Verbesserung von Verlauf, Untergrundbenetzung, Entschäumung ² Borchers GmbH, Monheim, Dispergieradditiv ³ Borchers GmbH, Monheim, Verlaufsmittel und Entschäumer ⁴ Borchers GmbH, Monheim, Verdicker ⁵ Tronox Incor., USA, TiO₂ | |

### Beispiel 3 (Vergleich)

**Tabelle 2: Formulierung eines wässrigen 2K-PUR Klarlackes**

| **Komponente 1** | **Gew.-Teile** |
|---|---|
| Polyolkomponente (b1): | 43,70 |
| Surfynol^{®} 104 BC¹ | 0,71 |
| Borchigen^{®} SN 95² | 2,24 |
| Borchigol^{®} LA 200³ (10%-ig in BG) | 0,89 |
| Borchigel^{®} PW 25⁴ | 0,14 |
| Tronox^{®} R-KB-4⁵ | 27,97 |
| | |
| | |

| **Komponente 2** | |
|---|---|
| Polyisocyanatkomponente (a1): (80%-ig MPA) | 19,60 |
| | |
| Gesamt Komp. 1 + Komp. 2 | 95,25 |
| MV Komp. 1 + Komp. 2 | 75,65 : 19,60 |
| H₂O 30 sec. DIN 4 auf 100,0 g | 4,57 |

| | |
|---|---|
| ¹ Air Products N.L., Additiv zur Verbesserung von Verlauf, Untergrundbenetzung, Entschäumung ² Borchers GmbH, Monheim, Dispergieradditiv ³ Borchers GmbH, Monheim, Verlaufsmittel und Entschäumer ⁴ Borchers GmbH, Monheim, Verdicker ⁵ Tronox Incor., USA, TiO₂ | |

### Anwendungstechnische Daten

**Tabelle 3: Glanzwerte (erfindungsgemäß)**

| Zeit [h] | Glanz 20°/60°/Haze nach DIN 67530 (Tabelle 1) | Glanz 20°/60°/Haze nach DIN 67530 (Tabelle 2) |
|---|---|---|
| 0 | 76/88/29 | 85/93/19 |
| 1 | 75/88/25 | 83/93/26 |
| 2 | 76/88/33 | 84/94/17 |
| 3 | 76/89/36 | 83/93/19 |
| 4 | 75/89/50 | 83/94/18 |
| 5 | 70/88/84 | 81/93/23 |

**Tabelle 4: Glanzwerte (Vergleichswerte)**

| Zeit [h] | Glanz 20°/60°/Haze nach DIN 67530 (Tabelle 1) | Glanz 20°/60°/Haze nach DIN 67530 (Tabelle 2) |
|---|---|---|
| 0 | 55/85/15 | 58/72/9 |
| 1 | 53/63/10 | 59/71/15 |
| 2 | 56/60/25 | 60/73/10 |
| 3 | 54/61/10 | 58/70/12 |
| 4 | 54/60/29 | 61/70/9 |
| 5 | 58/59/62 | 59/73/13 |

## Patentansprüche

1. Urethanisierter Polyester, der dadurch erhältlich ist, dass in einer ersten Reaktionsstufe ein Umsetzungsprodukt (A) aus
a) 5 bis 25 Gew.-% einer unsubstituierten oder substituierten Benzoesäure, die mit 1, 2 oder 3 Substituenten ausgewählt aus der Gruppe bestehend aus F, Cl, Br, -CH₃, -CH₂-CH₃, -OH, -O-CH₃ und -O-CH₂-CH₃ substituiert sein kann,
b) 15 bis 50 Gew.-% wenigstens einer Di- und/oder Tricarbonsäure bzw. deren Anhydriden,
c) 20 bis 60 Gew.-% wenigstens eines di- und/oder trifunktionellen Alkohols und
d) 3 bis 20 Gew.-% Dimethylolpropionsäure,
wobei sich die Gewichtsangaben der Komponenten a) bis d) zu 100 Gew.-% ergänzen, erhalten wird
und in einer weiteren Reaktionsstufe das Umsetzungsprodukt (A) mit wenigstens einem organischen Polyisocyanat (B) umgesetzt wird.

2. Urethansierter Polyester nach Anspruch 1, **dadurch gekennzeichnet, dass** der urethanisierte Polyester eine Säurezahl von 15 bis 35 mg KOH/g aufweist.

3. Urethanisierter Polyester nach Anspruch 1, **dadurch gekennzeichnet, dass** die Di- und/oder Tricarbonsäuren bzw. deren Anhydride ausgewählt werden aus der Gruppe bestehend aus Phthalsäure, Phthalsäureanhydrid, Hexahydrophthalsäureanhydrid, Isophthalsäure, Isophthalsäure, Maleinsäureanhydrid, Terephthalsäure, Fumarsäure, Adipinsäure und Benzoltricarbonsäure.

4. Urethanisierter Polyester nach Anspruch 1, **dadurch gekennzeichnet, dass** di- und trifunktionelle Alkohole ausgewählt werden aus der Gruppe bestehend aus Ethylenglykol, 1,2-Propylenglykol, 1,6-Hexandiol, 1,4-Cyclohexandimethanol, Neopentylglykol, Trimethylolpropan und Glycerin.

5. Urethanisierter Polyester nach einem oder mehreren der Ansprüche 1 bis 4, **dadurch gekennzeichnet, dass** der urethanisierte Polyester ein gewichtsmittleres Molekulargewicht Mw im Bereich zwischen 3500 g/mol bis 30000 g/mol aufweist

6. Urethanisierter Polyester nach einem oder mehreren der Ansprüche 1 bis 5, **dadurch gekennzeichnet, dass** der urethanisierte Polyester ein zahlenmittleres Molekulargewicht Mn im Bereich zwischen 500 g/mol bis 20000 g/mol aufweist

7. Urethanisierter Polyester nach einem oder mehreren der Ansprüche 1 bis 6, **dadurch gekennzeichnet, dass** der urethanisierte Polyester eine Hydroxylzahl im Bereich zwischen 45 mg/KOH und 190 mg/KOH aufweist.

8. Urethanisierter Polyester nach einem oder mehreren der Ansprüche 1 bis 7, **dadurch gekennzeichnet, dass** der urethanisierte Polyester durch Umsetzung der Komponenten (A) und (B) in einem Verhältnis im Bereich zwischen 2:1 und 4:1 erhalten wird.

9. Urethanisierter Polyester nach einem oder mehreren der Ansprüche 1 bis 8, **dadurch gekennzeichnet, dass** der urethanisierte Polyester einen NCO-Gehalt im Bereich zwischen 15 und 25 Gew.-% aufweist.

10. Wässrige Bindemittelkombination enthaltend wenigstens einen urethanisierten Polyester nach einem oder mehreren der Ansprüche 1 bis 9.

11. Wässrige Bindemittelkombination nach Anspruch 10, **dadurch gekennzeichnet, dass** die wässrige Bindemittelkombination einen Feststoffgehalt von 35 bis 50 Gew.-% aufweist

12. Beschichtungsmittel enthaltend wenigstens eine wässrige Bindemittelkombination nach Anspruch 10 oder 11 und weitere Hilfs- und Zusatzmittel.
